## Europäisches Patentamt
## European Patent Office
## Office européen des brevets

(11) Veröffentlichungsnummer: **0 498 174 B1**

# (12) EUROPÄISCHE PATENTSCHRIFT

(45) Veröffentlichungstag der Patentschrift: **15.11.95**

(21) Anmeldenummer: **92100556.7**

(22) Anmeldetag: **15.01.92**

(51) Int. Cl.⁶: **B60T 8/72**, B60K 28/16,
B60T 8/00, B60T 8/48

(54) **Antriebsschlupfregelsystem.**

(30) Priorität: **07.02.91 DE 4103635**

(43) Veröffentlichungstag der Anmeldung:
**12.08.92 Patentblatt 92/33**

(45) Bekanntmachung des Hinweises auf die
Patenterteilung:
**15.11.95 Patentblatt 95/46**

(84) Benannte Vertragsstaaten:
**DE FR GB SE**

(56) Entgegenhaltungen:
**EP-A- 0 064 669**
**WO-A-88/02708**
**DE-A- 3 807 757**

(73) Patentinhaber: **ROBERT BOSCH GMBH**
**Postfach 30 02 20**
**D-70442 Stuttgart (DE)**

(72) Erfinder: **Ziegler, Andreas, Dipl.-Ing.**
**Unterer Ezachweg 8**
**W-7250 Leonberg (DE)**

EP 0 498 174 B1

**Beschreibung**

Stand der Technik

Das Anfahren eines Fahrzeugs wird im wesentlichen durch folgende Größen bestimmt:
- Abgegebenes Motormoment
- Fahrwiderstand
- Reibwert

Voraussetzung für das Anfahren ist, daß erstens der maximale Kraftschluß so hoch liegt, daß der Fahrwiderstand (z.B. eine Steigung) überwunden werden kann (physikalische Grenze) und zweitens, daß der Motor genügend Antriebsmoment liefert, um das Fahrzeug zu bewegen.

Die Antriebsschlupfregelung, wie sie z.B. aus der DE-C22818813 bekannt ist, soll die Antriebsräder in den optimalen Schlupfbereich regeln. Eine Regelung auf das Maximum der μ-Schlupf-Kurve ist jedoch nur dann sinnvoll, wenn dabei ausreichend Motormoment abgegeben wird. Da im eingekuppelten Zustand die Raddrehzahlen und die Motordrehzahl zueinander proportional sind, kann es dazu kommen, daß bei einer Regelung auf kleine Schlupfwerte die Motordrehzahl soweit reduziert wird, daß das noch abgegebene Motormoment nicht mehr ausreicht, um den Fahrwiderstand zu überwinden. Im Extremfall wird der Motor dabei sogar abgewürgt.

Bei der Antriebsschlupfregelung gemäß EP-A-0 064 669 (Bosch) wird die Motordrehzahl gemessen und keine Regelung unterhalb der Leerlaufdrehzahl vorgenommen.

Bei den auf dem gleichen Erfindungsgedanken beruhenden Lösungen gemäß den Ansprüchen 1 und 2 orientiert sich der als Sollwert vorgegebene Schlupf nicht nur am Maximum der Schlupfkurve, sondern auch an einer Mindestmotorleistung bzw. Mindestmotordrehzahl.

Die Motordrehzahl muß nicht gemessen werden und es wird, unter Berücksichtigung des Übersetzungsverhältnisses, eine einfache Maximalauswahl aus zwei Geschwindigkeiten gemacht.

Durch zusätzliches Auswerten der Motordrehzahl wird dies gewährleistet.

Betrachtet wird im folgenden ein Zweiachsfahrzeug mit angetriebener Hinterachse.

Es sei:

$V_{vl}$ = Radgeschwindigkeit vorne links
$V_{vr}$ = Radgeschwindigkeit vorne rechts
$V_{hl}$ = Radgeschwindigkeit hinten links
$V_{hr}$ = Radgeschwindigkeit hinten rechts
$n_{mot}$ = momentane Motordrehzahl
$n_{min}$ = Mindestmotordrehzahl bei ASR-Betrieb (z.B. Leerlaufdrehzahl)

Die mittlere Geschwindigkeit $V_{HM}$ der Antriebsräder (Antriebsgeschwindigkeit) ist:

$$V_{HM} = (V_{hl} + V_{hr})/2 \tag{1}$$

Aus Motordrehzahl und Antriebsachsgeschwindigkeit kann das Übersetzungsverhältnis ü berechnet werden:

$$ü := n_{mot}/V_{HM} \tag{2}$$

Aus (2) und der festgelegten Mindestmotordrehzahl ergibt sich eine Mindestantriebsachsgeschwindigkeit:

$$V_{HMmin} = n_{min}/ü \tag{3}$$

und eine begrenzte Antriebsachsgeschwindigkeit $V_{HMKor}$ (Maximalauswahl aus (1) und (3)):

$$V_{HMKor} = \max (V_{HM}, V_{HMmin}) \tag{4}$$

Der Sollwert (Referenz) $V_{VM}$ für die Motorregelung wird in heutigen ASR Systemen z.B. aus dem Mittelwert der Vorderachsgeschwindigkeit gebildet:

$$V_{VM} = (V_{vl} + V_{vr})/2 \tag{5}$$

Zu der Vorderachsgeschwindigkeit $V_{VM}$ wird noch ein zulässiger Antriebsschlupf S addiert.

Die Mindestantriebsachsgeschwindigkeit $V_{HMmin}$ kann nun bei der Berechnung der Motorreglerreferenz (Sollwert), $Ref_M$ herangezogen werden:

$$Ref_M = max [(V_{VM} + Schlupf), V_{HMmin}] \tag{5a}$$

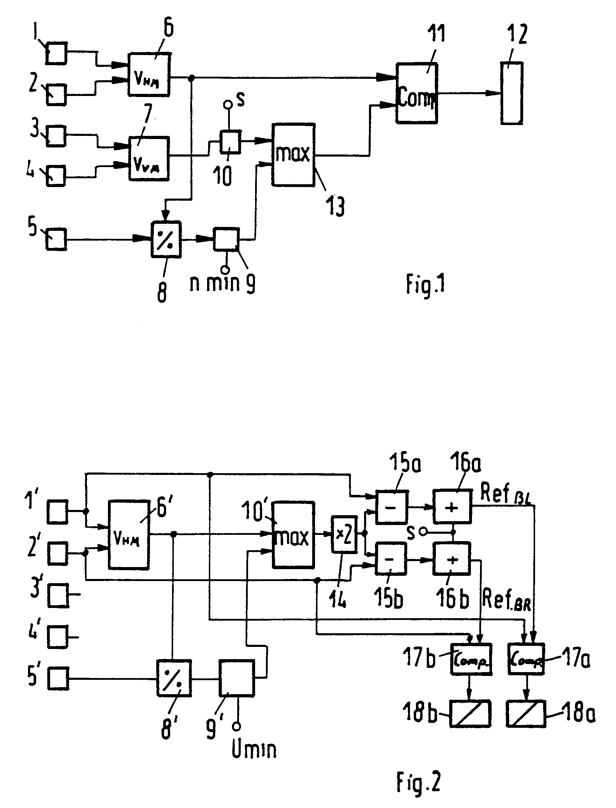

Durch die Maximalauswahl zwischen ($V_{VM}$ + Schlupf und $V_{HMmin}$) wird gewährleistet, daß ein Sollwert vorgegeben wird, der mindestens so hoch liegt, daß die geforderte Mindestmotordrehzahl $n_{min}$ nicht unterschritten wird. Ein Ausführungsbeispiel hierzu in Blockdarstellung zeigt Fig. 1.

In Fig. 1 sind mit 1 und 2 den angetriebenen Hinterrädern zugeordnete Geschwindigkeitssensoren bezeichnet. Den nicht angetriebenen Rädern zugeordnete Sensoren tragen die Bezugszeichen 3 und 4. Ein Sensor 5 gibt ein der momentanen Motordrehzahl $n_{mot}$ entsprechendes Signal ab.

In Blöcken 6 und 7 wird die mittlere Geschwindigkeit der Hinterräder $V_{HM}$ bzw. die mittlere Geschwindigkeit der nicht angetriebenen Vorderräder $H_{VM}$ gebildet.

In einem Dividierblock 8 wird aus dem Drehzahlsignal des Sensors 5 und der mittleren Hinterradgeschwindigkeit $V_{HM}$ die gerade vorhandene Getriebeübersetzung ü = $n_{mot}/V_{HM}$ gebildet. Durch diese Übersetzung ü wird in einem Block 9 die vorgegebene z.B. konstante Mindestdrehzahl $n_{min}$ dividiert.

Hierdurch erhält man die minimale Antriebsachsgeschwindigkeit $V_{HMmin}$ bei dem gerade eingelegten Gang. In einem Block 10 wird zu $V_{VM}$ der vorgegebene Schlupfwert S hinzu addiert. Ein Auswahlblock 13 wählt aus den Größen ($V_{VM}$ + S) und $V_{HMmin}$ den Maximalwert aus. Das Ergebnis wird dann als Referenzwert $Ref_M$ bei der Antriebsschlupfregelung durch Motoreingriff verwendet, wobei die Referenz $Ref_M$ mit der mittleren Hinterachsgeschwindigkeit verglichen (Block 11) und abhängig von diesem Ergebnis das Motormoment erhöht, erniedrigt oder konstantgehalten wird (Block 12).

Die beschriebene Regelung, die auch mittels eines entsprechend programmierten Rechners durchgeführt werden kann, benötigt keine explizite Leerlaufregelung während des ASR-Betriebs, ist unabhängig von der tatsächlichen Motorleistung, verhindert das Abwürgen des Motors bei Anfahren mit ASR-Betrieb und paßt den vorgegebenen Sollwert automatisch an den momentanen Fahrzustand (Last) an.

Es wäre auch möglich, die einzelnen Hinterradgeschwindigkeiten mit den entsprechenden Vorderradgeschwindigkeiten zu vergleichen und die beiden Vorderradgeschwindigkeiten jeweils zusammen mit dem Signal aus Block 9 der Auswahlschaltung 10 zu zuführen.

In den folgenden Abschnitten wird ein Ausführungsbeispiel eines nach den oben erläuterten Prinzipien ausgebildeten Bremsreglers beschrieben.

Die heutige Bremsregelung ist häufig so ausgelegt, daß das linke Antriebsrad zur Sollwert-(Referenz)-bildung für das rechte Antriebrad, und das rechte Antriebsrad zur Sollwert-(Referenz)-bildung für das linke Antriebsrad herangezogen wird; ein zulässiger Schlupf S wird jeweils addiert. Mit diesem Verfahren wird eine Differentialsperrwirkung durch Synchronisation der Antriebsräder erreicht; es ist hier somit:

$$Ref_{Bl} = V_{hr} + Schlupf \tag{6a}$$
$$Ref_{Br} = V_{hl} + Schlupf \tag{6b}$$

Aus (1) unter Verwendung von (4) ergibt sich:

$$V_{hl} = 2 \cdot V_{HMKor} - V_{hr} \tag{7a}$$
$$V_{hr} = 2 \cdot V_{HMKor} - V_{hl} \tag{7b}$$

Eingesetzt in (6a) und (6b) erhält man:

$$Ref_{Bl} = V_{HMKor} - V_{hl} + Schlupf \tag{8a}$$
$$Ref_{Br} = V_{HMKor} - V_{hr} + Schlupf \tag{8b}$$

Damit wird beim Bremsregler ein Sollwert vorgegeben, der eine Mindestmotordrehzahl gewährleistet.

Ein entsprechendes Ausführungsbeispiel in Blockausbildung zeigt Fig. 2.

Hier wird wieder in einem Block 6' die Größe $V_{HM}$ gebildet und mittels der Blöcke 8', 9' und 10' wird auch hier $V_{HMKor}$ gebildet. Diese Größe wird in einem Block 14 mit 2 multipliziert und vom Ergebnis wird $V_{hl}$ bzw. $V_{hr}$ in Blöcken 15a bzw. 15b abgezogen. In nachfolgenden Blöcken 16a und 16b wird dann noch der vorgegebene Schlupfwert S addiert und hierdurch $Ref_{Bl}$ bzw. $Ref_{Br}$ erhalten. In Vergleichern 17a und 17b wird festgestellt, ob ein Rad durchdreht und mittels Ventilen 18a und 18b der Bremsdruck an den Rädern geregelt.

Auch hier könnte der Regler durch einen programmierten Rechner gebildet sein. Es ist auch nicht notwendig, daß in die Referenzgröße die Geschwindigkeit des anderen angetriebenen Rads eingeht. Hier wäre z.B. auch die Verwendung von $V_{VM}$ anstatt von $V_{HM}$ und der Blöcke 14 und 15a und 15b möglich.

**Patentansprüche**

1. Antriebsschlupfregelverfahren, bei dem beim Durchdrehen der angetriebenen Räder das Motormoment reduziert wird, wozu die Geschwindigkeit(en) der angetriebenen Räder mit wenigstens einem von den Geschwindigkeiten der nicht angetriebenen Räder abhängigen Vergleichswert verglichen wird, bei dem eine Mindestmotordrehzahl vorgegeben ist, und bei dem ein Unterschreiten dieser Mindestmotordrehzahl durch die Motordrehzahl durch die Antriebsschlupfregelung verhindert wird, dadurch gekennzeichnet, daß ein weiterer von der Mindestmotordrehzahl des Motors abhängigen Vergleichswert $n_{min}/\ddot{u}$ gebildet wird, daß eine Motorreferenzgröße $Ref_M$ aus der folgenden Maximalauswahl gebildet wird :

$$Ref_M = \max \left[ \left( \frac{V_{nal} + V_{nar}}{2} + S \right), \, n_{min}/\ddot{u} \right]$$

wobei $V_{nal,r}$ die Geschwindigkeit der nicht angetriebenen Räder (links, rechts), $n_{min}$ die Mindestmotordrehzahl, $\ddot{u}$ die Getriebeübersetzung und $S$ ein vorgegebener Schlupfwert ist, und daß diese Motorreferenzgröße $Ref_M$ als Vergleichswert für die Antriebsschlupfregelung benutzt wird.

2. Antriebsschlupfregelverfahren (ASR), bei dem beim Durchdrehen eines angetriebenen Rads dieses gebremst wird, wozu die Geschwindigkeit dieses Rads mit einem von der Geschwindigkeit wenigstens eines weiteren Rads abhängigen Vergleichswert verglichen wird, bei dem eine Mindestmotordrehzahl vorgegeben ist, und bei dem ein Unterschreiten dieser Mindestmotordrehzahl durch die Motordrehzahl durch die Antriebsschlupfregelung verhindert wird, dadurch gekennzeichnet, daß ein weiterer von einer Mindestmotordrehzahl abhängiger Vergleichswert $n_{min}/\ddot{u}$ gebildet wird, daß Bremsreferenzgrößen $Ref_{Bl}$ und $Ref_{Br}$ aus den folgenden Maximalauswahlen gebildet werden :

$$Ref_{Bl} = 2 \cdot \max \left( \frac{V_{al} + V_{ar}}{2}, \, n_{min}/\ddot{u} \right) - V_{al} + S,$$

$$Ref_{Br} = 2 \cdot \max \left( \frac{V_{al} + V_{ar}}{2}, \, n_{min}/\ddot{u} \right) - V_{ar} + S$$

wobei

$$\frac{V_{al} + V_{ar}}{2}$$

der Mittelwert der Geschwindigkeiten der angetriebenen Räder ($V_{al}$, $V_{ar}$), $n_{min}$ die Mindestmotordrehzahl, $\ddot{u}$ die Getriebeübersetzung und $S$ ein vorgegebener Schlupfwert ist und daß diese Bremsreferenzgrößen $Ref_{Bl}$ und $Ref_{Br}$ als Vergleichswerte für die Antriebsschlupfregelung benutzt werden.

**Claims**

1. Traction control method in which the engine torque is reduced when the driven wheels spin, for which purpose the speed(s) of the driven wheels is compared with at least one comparison value dependent on the speeds of the non-driven wheels, in which method a minimum engine speed is prescribed and in which method the engine speed is prevented from dropping below this minimum engine speed by the traction control, characterized in that a further comparison value $n_{min}/\ddot{u}$which is dependent on the minimum engine speed is formed, in that an engine reference variable $Ref_M$ is formed from the following maximum selection:

$$Ref_M = max \; [(\frac{V_{nal} + V_{nar}}{2} + S), \; n_{min}/\ddot{u}]$$

$V_{nal,r}$ being the speed of the non-driven wheels (left-hand, right-hand), $n_{min}$ being the minimum engine speed, ü being the gearbox transmission ratio and S being a prescribed slip value, and in that this engine reference variable $Ref_M$ is used as comparison value for the traction control.

2. Traction control method (TCS) in which a driven wheel is braked when it spins, for which purpose the speed of this wheel is compared with a comparison value which is dependent on the speed of at least one further wheel, in which method a minimum engine speed is prescribed, and in which method the engine speed is prevented from dropping below this minimum engine speed by the traction control, characterized in that a further comparison value $n_{min}/\ddot{u}$ which is dependent on a minimum engine speed is formed, in that brake reference variables $Ref_{B1}$ and $Ref_{Br}$ are formed from the following maximum selections:

$$Ref_{B1} = 2 \cdot max \; (\frac{V_{al} + V_{ar}}{2}, \; n_{min}/\ddot{u}) - V_{al} + S,$$

$$Ref_{Br} = 2 \cdot max \; (\frac{V_{al} + V_{ar}}{2}, \; n_{min}/\ddot{u}) - V_{ar} + S$$

where

$$\frac{V_{al} + V_{ar}}{2}$$

is the mean value of the speeds of the driven wheels ($V_{a1}$, $V_{ar}$), $n_{min}$ is the minimum engine speed, ü is the gearbox transmission ratio and S is a prescribed slip value, and in that these brake reference variables $Ref_{B1}$ and $Ref_{Br}$ are used as comparison values for the traction control.

## Revendications

1. Procédé de réglage du patinage d'entraînement, dans lequel le couple moteur est réduit lors du patinage des roues entraînées, la vitesse (les vitesses) des roues entraînées étant comparée avec au moins une valeur de comparaison dépendant des vitesses des roues non entraînées, procédé dans lequel est prédéfinie une vitesse minimale de rotation du moteur, et dans lequel un franchissement vers le bas de cette vitesse minimale de rotation du moteur est empêché par la régulation du patinage à l'entraînement, procédé caractérisé en ce qu'on forme une autre valeur de comparaison $n_{min}/\ddot{u}$ dépendant de la vitesse minimale de rotation du moteur, en ce qu'on forme une grandeur de référence du moteur $Ref_M$ à partir du choix maximal suivant :

$$Re f_M = max \; [(\frac{V_{nal} + V_{nar}}{2} + S), \; n_{min}/\ddot{u}]$$

$V_{nal,r}$ étant la vitesse des roues non entraînées (gauches, droites), $N_{min}$ la vitesse minimale de rotation du moteur, ü le rapport de transmission de la boîte de vitesses et S une valeur prédéfinie du patinage, et en ce que cette grandeur de référence du moteur $Ref_M$ est utilisée comme valeur de comparaison pour la régulation du patinage d'entraînement.

2. Procédé de réglage du patinage d'entraînement (ASR), dans lequel, lors de l'emballement d'une roue entraînée, celle-ci est freinée, la vitesse de cette roue étant comparée à une valeur de comparaison dépendant de la vitesse d'au moins une autre roue pour laquelle et prédéfinie une vitesse minimale de rotation du moteur, et pour laquelle un franchissement vers le bas de cette vitesse minimale de rotation du moteur par la vitesse de rotation du moteur est empêché par la régulation du patinage de d'entraînement, procédé caractérisé en ce qu'on forme une autre valeur de comparaison $n_{min}/u$ dépendant d'une vitesse minimale de rotation du moteur, et en ce qu'il est formé des grandeurs de référence de freinage $Ref_{B1}$ et $Ref_{Br}$ à partir du choix maximal suivant :

$$\mathrm{Re}f_{B1} = 2 \quad . \quad \max \; (\frac{V_{al} + V_{ar}}{2}, \quad n_{min} / \ddot{u}) - V_{al} + S$$

$$\mathrm{Re}f_{Br} = 2 \quad . \quad \max \; (\frac{V_{al} + V_{ar}}{2}, \quad n_{min} / \ddot{u}) - V_{ar} + S$$

$$\frac{V_{al} + V_{ar}}{2}$$

étant la valeur moyenne des vitesses des roues entraînées ($V_{al}$, $V_{ar}$), $n_{min}$ la vitesse de rotation minimale du moteur, $\ddot{u}$ le rapport de transmission de la boîte de vitesses et S une valeur de patinage prédéfinie, et en ce que ces grandeurs de référence de freinage $Ref_{B1}$ et $Ref_{Br}$ sont utilisées comme valeurs de comparaison pour la régulation du patinage d'entraînement.

EP 0 498 174 B1

Fig.1

Fig.2